# EUROPÄISCHE PATENTSCHRIFT

(11) **EP 2 242 613 B1**
(45) Veröffentlichungstag und Bekanntmachung des Hinweises auf die Patenterteilung: **13.03.2013**
(21) Anmeldenummer: 08871015.7
(22) Anmeldetag: 11.11.2008
(51) Int. Cl.: B24B 23/04, B24B 23/02, B27B 19/00, B23D 51/16, B23D 47/12, B23Q 11/00

(54) **MOTORISCH ANGETRIEBENE WERKZEUGMASCHINE**
MOTOR-DRIVEN MACHINE TOOL
MACHINE-OUTIL ENTRAÎNÉE PAR UN MOTEUR

(30) Priorität: 16.01.2008 DE 102008004638
(43) Veröffentlichungstag der Anmeldung: 27.10.2010
(73) Patentinhaber: Robert Bosch GmbH, 70442 Stuttgart (DE)
(72) Erfinder: ZAISER, Adolf, 73257 Koengen (DE)
(86) Internationale Anmeldenummer: PCT/EP2008/065277
(87) Internationale Veröffentlichungsnummer: WO 2009/089940

(56) Entgegenhaltungen:
- EP-A- 0 203 255
- EP-A- 0 372 376
- EP-A- 1 407 847
- US-A1- 2003 220 058

## Beschreibung

Die Erfindung bezieht sich auf eine motorisch angetriebene Werkzeugmaschine, insbesondere eine Handwerkzeugmaschine, nach dem Oberbegriff des Anspruches 1.

### Stand der Technik

Aus der DE 101 04 993 A1 ist eine Handwerkzeugmaschine zum Schleifen oder Polieren bekannt, die einen Antriebsmotor aufweist, ein mit dem Antriebsmotor gekoppeltes Getriebe sowie einen mit dem Getriebe wirkungsmäßig verbundenen Schleifteller. Die Handwerkzeugmaschine kann zum Schwingschleifen eingesetzt werden, bei der mithilfe eines Exzenterantriebs die Rotationsbewegung der Antriebswelle in eine exzentrische Drehbewegung des Schleiftellers umgesetzt wird. Da bei Schleifgeräten mit exzentrischem Antrieb Unwuchtschwingungen entstehen, die zu Komforteinbußen sowie zu erhöhten Materialbelastungen führen, muss darauf geachtet werden, dass derartige Schwingungen ein zulässiges Maß nicht überschreiten.

Eine Gattungsgemäße Werkzengmaschine ist aus der EP-A- 0 372 376 bekannt.

### Offenbarung der Erfindung

Der Erfindung liegt die Aufgabe zu Grunde, eine motorisch angetriebene Werkzeugmaschine, bei der die Drehbewegung der Antriebswelle über eine Exzenterkoppeleinrichtung auf die Abtriebswelle übertragbar ist, welche Träger des Werkzeugs ist, mit einfachen konstruktiven Maßnahmen schwingungsarm auszubilden.

Diese Aufgabe wird erfindungsgemäß mit den Merkmalen des Anspruches 1 gelöst. Die Unteransprüche geben zweckmäßige Weiterbildungen an.

Bei der erfindungsgemäßen, motorisch angetriebenen Werkzeugmaschine handelt es sich vorzugsweise um eine Handwerkzeugmaschine. Die Drehbewegung der vom Antriebsmotor beaufschlagten Antriebswelle wird mithilfe einer Exzenterkoppeleinrichtung auf die Abtriebswelle übertragen, die Träger des Werkzeuges ist. Mittels der Exzenterkoppeleinrichtung wird eine Drehpendelbewegung der Abtriebswelle erzeugt.

Zur Kompensation der Unwuchtschwingungen, die auf Grund der exzentrischen Antriebsbewegung entstehen, ist eine Massenausgleichseinrichtung vorgesehen, die mit mindestens einer der Wellen, also entweder der Antriebswelle oder der Abtriebswelle oder beiden Wellen in Wirkverbindung steht und eine der Exzenterkoppelbewegung entgegengerichtete Ausgleichsbewegung ausführt. Dieser Schwingungsausgleich führt dazu, dass die Schwingungs- bzw. Vibrationsbelastung in der Werkzeugmaschine zumindest in einzelnen Betriebsphasen erheblich reduziert ist, und zwar vorteilhafterweise zumindest im Leerlauf der Werkzeugmaschine, gegebenenfalls auch während des Arbeitsbetriebs. Zur Reduzierung der Schwingungen übt die Massenausgleichseinrichtung eine zur Exzenterkoppelbewegung entgegengerichtete Ausgleichsbewegung aus, welche die Drehschwingungen, hervorgerufen durch die Exzenterkoppeleinrichtung, wenigstens teilweise kompensiert.

Die Massenausgleichseinrichtung umfasst ein Hubmassenteil, welches in einer Schlittenführung verstellbar gelagert ist und von einem Exzenterglied beaufschlagt wird, das von einer der Wellen angetrieben wird. Das Hubmassenteil führt eine rotatorische Ausgleichsbewegung aus. Diese Ausgleichsbewegung ist zweckmäßigerweise der exzentrischen Antriebsbewegung entgegengesetzt, und zwar einerseits bezogen auf die Auslenkungsrichtung und andererseits auf die Höhe des Massenausgleichs. Der Massenausgleich erfolgt insbesondere in der Weise, dass die Lagerkräfte der Abtriebswelle im Leerlauf gegen Null gehen. Gegebenenfalls kann aber auch ein anderer Arbeitspunkt gewählt werden, bei dem die Unwuchtschwingungen ausgeglichen werden, beispielsweise ein Arbeitspunkt während des regulären Betriebs der Werkzeugmaschine. Es ist auch möglich, die Ausgleichsschwingungen, welche über die Massenausgleichseinrichtung erzeugt werden, in veränderlicher Weise in Abhängigkeit des aktuellen Betriebsmodus zu verstärken oder abzuschwächen, beispielsweise durch eine veränderte Ausgangsposition des Hubmassenteils.

Das Hubmassenteil führt zweckmäßigerweise innerhalb der Schlittenführung die rotatorische Ausgleichsbewegung aus. Möglich ist hierbei grundsätzlich sowohl eine ausschließlich rotatorische Bewegung des Hubmassenteils als auch eine Kombination aus rotatorischer und translatorischer Bewegung. In beiden Fällen kann die Bewegungsmöglichkeit des Hubmassenteils in der Schlittenführung durch entsprechend ausgeführte Lager oder durch Hubkurven bzw. Kulissenführungen zwischen Hubmassenteil und Schlittenführung ermöglicht werden. In jedem Fall wird die Bewegung des Hubmassenteils von dem Exzenterglied erzeugt, das von der Antriebswelle oder von der Abtriebswelle mittelbar oder unmittelbar angetrieben wird. Die Schlitten- bzw. Kulissenführung ist hierbei zweckmäßigerweise gehäusefest angeordnet; gegebenenfalls kommt aber auch eine Lagerung der Schlittenführung an einem beweglichen Bauteil der Werkzeugmaschine in Betracht.

Zur Realisierung der Rotationsbewegung des Hubmassenteils in der Schlittenführung ist bevorzugt ein Wälzlager vorgesehen, über das das Hubmassenteil in der Schlittenführung gelagert ist. Die Lagerung des Hubmassenteils erfolgt zweckmäßig mittig in der Schlittenführung, so dass eine symmetrische Lagerung besteht und zweckmäßigerweise eine gleichmäßige Auslenkung aus der Ausgangslage zu beiden Richtungen durchgeführt werden kann. Auch das Exzenterglied, insbesondere in seiner Ausführung als Exzenternocken, ist vorteilhafterweise mittig in der Schlittenführung angeordnet, wodurch eine gleichmäßige Kraftbeaufschlagung des Hubmassenteils gegeben ist.

Die Abtriebswelle der Werkzeugmaschine ist beispielsweise fliegend exzentrisch im Gehäuse gelagert. Bei dieser Art der Lagerung ist die dem Werkzeug gegenüberliegende Stirnseite der Abtriebswelle von der Exzenterkoppeleinrichtung beaufschlagt.

Weitere Vorteile und zweckmäßige Ausführungen sind den weiteren Ansprüchen, der Figurenbeschreibung und den Zeichnungen zu entnehmen. Es zeigen:

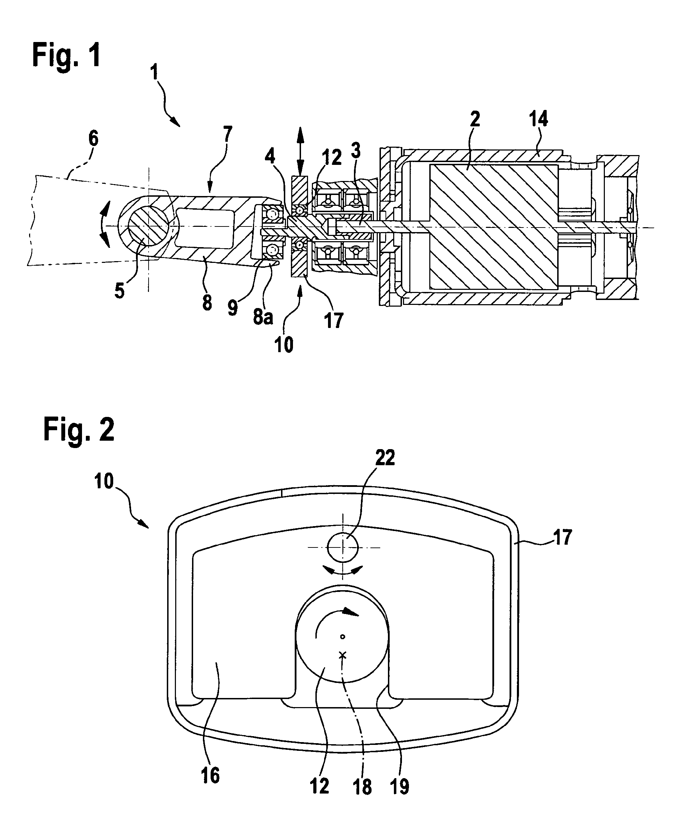

- Fig. 1: in Draufsicht eine Handwerkzeugmaschine, die eine Abtriebswelle zur Halterung eines Werkzeuges aufweist, wobei die Abtriebswelle eine oszillierende Dreh- bzw. Pendelschwingbewegung zum Sägen und Schleifen ausüben kann, mit einem elektrischen Antriebsmotor, dessen Anker fest mit einer koaxialen Antriebswelle verbunden ist, welche über eine Exzenterkoppeleinrichtung die Abtriebswelle antreibt, und mit einer Massenausgleichseinrichtung zum Ausgleichen von Unwuchtschwingungen,
- Fig. 2: die Massenausgleichseinrichtung in Einzeldarstellung, ausgeführt als ein in einer Schlittenführung drehbar gelagertes Hubmassenteil, welches von einem Exzenternocken angetrieben wird.

Die in Fig. 1 dargestellte Handwerkzeugmaschine 1 ist mit einem elektrischen Antriebsmotor 2 versehen, der einen Anker 3 aufweist, mit dem eine koaxial angeordnete Antriebswelle 4 drehfest verbunden ist. Die Antriebswelle 4 treibt über eine Exzenterkoppeleinrichtung 7 eine Abtriebswelle 5 an, die Träger eines auswechselbaren Werkzeugs 6 ist. Die Drehachsen von Antriebswelle 4 und Abtriebswelle 5 stehen senkrecht zueinander. Bei Betätigung des elektrischen Antriebsmotors 2 wird die Drehbewegung der Antriebswelle 4 über die Exzenterkoppeleinrichtung 7 in eine Drehpendelbewegung der Abtriebswelle 5 sowie des Werkzeuges 6 umgesetzt. Der Winkelausschlag der Drehpendelbewegung der Abtriebswelle 5 beträgt üblicherweise wenige Grad. Das Werkzeug 6 kann sowohl zum Schleifen als auch zum Schneiden oder Sägen eines Werkstückes eingesetzt werden.

Die Exzenterkoppeleinrichtung 7 umfasst eine Koppeleinrichtung 8, die auf der der Abtriebwelle 5 abgewandten Seite einen abgekröpften Abschnitt 8a aufweist, welcher mit einem Exzenternocken 9 in Kontakt steht, der drehfest auf der Antriebswelle 4 angeordnet ist. Die Koppelgabel 8 tastet die exzentrische Kontur des Exzenternockens 9 ab und wird hierdurch in die pendelnde Drehschwingung versetzt, die auf die Abtriebwelle 5 übertragen wird.

Bei der Bewegungsübertragung der Drehbewegung der Antriebswelle 4 auf die Abtriebswelle 5 mithilfe der Exzenterkoppeleinrichtung 7 entsteht eine Massenunwucht, die mittels einer Massenausgleichseinrichtung 10 zumindest teilweise kompensiert wird. Die Massenausgleichseinrichtung 10 ist ebenso wie die Exzenterkoppeleinrichtung 7 zwischen der Antriebswelle 4 und der Abtriebswelle 5 angeordnet. In der Massenausgleichseinrichtung 10 werden Schwingungen erzeugt, die den Unwuchtschwingungen entgegengerichtet sind, welche von der Exzenterkoppeleinrichtung 7 herrühren.

Wie Fig. 2 zu entnehmen, besteht die Massenausgleichseinrichtung 10 aus einem Hubmassenteil 16, welches beweglich in einem Schlittenführungsteil 17 gehalten ist, das zweckmäßigerweise gehäusefest an der Handwerkzeugmaschine angeordnet ist. Das Schlittenführungsteil 17 besteht aus einem umlaufenden, geschlossenen Rahmen, der einen Exzenternocken 12 umgreift, welcher drehfest auf der Antriebswelle 4 angeordnet ist. Innerhalb des Schlittenführungsteils 17 ist das Hubmassenteil 16 beweglich aufgenommen, das über ein als Wälzlager ausgeführtes Drehlager 22 drehbar im Schlittenführungsteil 17 gehalten ist. Das Hubmassenteil 16 weist eine Ausnehmung 19 auf, in die der antreibende Exzenternocken 12 einragt. Der Exzenternocken 12 ist um die Drehachse 18 drehbar gelagert, die mit Abstand zum Mittelpunkt des Exzenternockens verläuft. Die Drehachse 18 stellt zugleich die Drehachse der Antriebswelle 4 dar.

Der Exzenternocken 12 dient als Antrieb für das Hubmassenteil 16. Beim Umlaufen des Exzenternockens 12 wird dessen exzentrische Drehbewegung über die Innenwandungen der Ausnehmung 19 auf das Hubmassenteil 16 übertragen, das auf Grund seiner drehbaren Lagerung über das Wälzlager 22 eine Drehpendelbewegung um die Drehachse des Lagers 22 innerhalb des Schlittenführungsteils 17 ausübt. Diese Drehpendelbewegung des Hubmassenteils 16 liegt in einer Ebene senkrecht zur Drehachse 18 bzw. zur Antriebswelle 4. Die Auslenkungen sind hierbei entgegengesetzt gerichtet zu den Auslenkungen der Abtriebswelle 5 bzw. des daran angeordneten Werkzeuges 6.

Sowohl das Drehlager 22 als auch der Exzenternocken 12 sind in der Massenausgleichseinrichtung 10 symmetrisch angeordnet. Das Drehlager 22 ist mittig im Schlittenführungsteil 17 angeordnet, ebenso der Exzenternocken 12. Die Drehpendelbewegung des Hubmassenteils 16 bewegt sich üblicherweise in einem Winkelbereich von wenigen Grad, wobei die Dimensionen von Hubmassenteil 16 und Schlittenführungsteil 17 in der Weise aufeinander angepasst sind, dass das Hubmassenteil 16 sich stets innerhalb der Kontur des Schlittenführungsteils 17 bewegt.

## Patentansprüche

1. Motorisch angetriebene Werkzeugmaschine, insbesondere Handwerkzeugmaschine (1) mit drehbar anzutreibendem Werkzeug (6), mit einer von einer Antriebseinheit (2) angetriebenen Antriebswelle (4) und einer Abtriebswelle (5), auf der das Werkzeug (6) aufgenommen ist, wobei die Drehbewegung der Antriebswelle (4) über eine Exzenterkoppeleinrichtung (7) auf die Abtriebswelle (5) übertragbar ist und zum Schwingungsausgleich eine Massenausgleichseinrichtung (10) vorgesehen ist, die mit zumindest einer der Wellen (4, 5) in Wirkverbindung steht und eine der Exzenterkoppelbewegung entgegengerichtete Ausgleichsbewegung ausführt, **dadurch gekennzeichnet, dass** die Massenausgleichseinrichtung (10) ein Hubmassenteil (16) umfasst, das in einer Schlittenführung (17) verstellbar gelagert und von einem Exzenterglied (12) beaufschlagt ist, das von einer der Wellen (4, 5) angetrieben ist, wobei das Hubmassenteil (16) eine rotatorische Ausgleichsbewegung ausführt.

2. Werkzeugmaschine nach Anspruch 1,
**dadurch gekennzeichnet, dass** die rotatorische Ausgleichsbewegung in einer Ebene senkrecht zur Antriebswelle (4) stattfindet.

3. Werkzeugmaschine nach Anspruch 1 oder 2,
**dadurch gekennzeichnet, dass** das Hubmassenteil (16) in der Schlittenführung (17) drehbar gelagert ist.

4. Werkzeugmaschine nach einem der Ansprüche 1 bis 3,
**dadurch gekennzeichnet, dass** das Hubmassenteil (16) in der Schlittenführung (17) eine ausschließlich rotatorische Ausgleichsbewegung durchführt.

5. Werkzeugmaschine nach einem der Ansprüche 1 bis 3,
**dadurch gekennzeichnet, dass** das Hubmassenteil (16) in der Schlittenführung (17) eine kombiniert rotatorischtranslatorische Ausgleichsbewegung durchführt.

6. Werkzeugmaschine nach einem der Ansprüche 1 bis 5,
**dadurch gekennzeichnet, dass** das Hubmassenteil (16) in der Schlittenführung (17) über ein Wälzlager (22) drehbar gelagert ist.

7. Werkzeugmaschine nach einem der Ansprüche 1 bis 6,
**dadurch gekennzeichnet, dass** das Drehlager (22) des Hubmassenteils (16) mittig in der Schlittenführung (17) angeordnet ist.

8. Werkzeugmaschine nach einem der Ansprüche 1 bis 7,
**dadurch gekennzeichnet, dass** das Exzenterglied als Exzenternocken (12) ausgebildet ist, der das Hubmassenteil (16) beaufschlagt.

9. Werkzeugmaschine nach einem der Ansprüche 1 bis 8,
**dadurch gekennzeichnet, dass** das Exzenterglied (12) mittig in der Schlittenführung (17) angeordnet ist.

10. Werkzeugmaschine nach einem der Ansprüche 1 bis 9,
**dadurch gekennzeichnet, dass** die Abtriebswelle (4) fliegend exzentrisch im Gehäuse (14) gelagert ist.

## Claims

1. Motor-driven power tool, in particular portable power tool (1) having a tool (6) to be rotatably driven, having a drive shaft (4) driven by a drive unit (2), and an output shaft (5) on which the tool (6) is accommodated, wherein the rotary movement of the drive shaft (4) is transmissible to the output shaft (5) via an eccentric coupling device (7) and a mass balancing device (10) is provided for vibration compensation, said mass balancing device (10) being operatively connected to at least one of the shafts (4, 5) and executing a compensating movement in the opposite direction to the eccentric coupling movement, **characterized in that** the mass balancing device (10) comprises a stroking mass part (16) which is mounted adjustably in a slide guide (17) and is acted upon by an eccentric member (12) which is driven by one of the shafts (4, 5), wherein the stroking mass part (16) executes a rotary compensating movement.

2. Power tool according to Claim 1, **characterized in that** the rotary compensating movement takes place in a plane perpendicular to the drive shaft (4).

3. Power tool according to Claim 1 or 2, **characterized in that** the stroking mass part (16) is mounted rotatably in the slide guide (17).

4. Power tool according to one of Claims 1 to 3, **characterized in that** the stroking mass part (16) carries out an exclusively rotary compensating movement in the slide guide (17).

5. Power tool according to one of Claims 1 to 3, **characterized in that** the stroking mass part (16) executes a combined rotary-translatory compensating movement in the slide guide (17).

6. Power tool according to one of Claims 1 to 5, **characterized in that** the stroking mass part (16) is rotatably mounted in the slide guide (17) via a roller bearing (22).

7. Power tool according to one of Claims 1 to 6, **characterized in that** the rotary bearing (22) of the stroking mass part (16) is arranged centrally in the slide guide (17).

8. Power tool according to one of Claims 1 to 7, **characterized in that** the eccentric member is in the form of an eccentric cam (12) which acts on the stroking mass part (16).

9. Power tool according to one of Claims 1 to 8, **characterized in that** the eccentric member (12) is arranged centrally in the slide guide (17).

10. Power tool according to one of Claims 1 to 9, **characterized in that** the output shaft (4) is cantilever-mounted eccentrically in the housing (14).

## Revendications

1. Machine-outil entraînée par un moteur, notamment machine-outil (1) pourvue d'un outil (6) pouvant être entraîné en rotation, d'un arbre d'entraînement en entrée (4) pouvant être entraîné par une unité d'entraînement (2) et d'un arbre d'entraînement en sortie (5) sur lequel l'outil (6) est reçu, le mouvement de rotation de l'arbre d'entraînement en entrée (4) pouvant être transmis à l'arbre d'entraînement en sortie (5) par le biais d'un dispositif de couplage excentré (7) et un dispositif de compensation de la masse (10) étant prévu pour compenser l'oscillation et se trouvant en liaison active avec au moins un des arbres (4, 5) et effectuant un mouvement de compensation opposé par rapport au mouvement de couplage excentré, **caractérisée en ce que** le dispositif de compensation de la masse (10) comprend une partie de masse de levée (16) disposée de façon à pouvoir être déplacée dans un guide-coulisseau (17) et sollicitée par un élément excentré (12) entraîné par un des arbres (4, 5), la partie de masse de levée (16) effectuant un mouvement de compensation en rotation.

2. Machine-outil selon la revendication 1, **caractérisée en ce que** le mouvement de compensation en rotation se place dans un plan perpendiculaire à l'arbre d'entraînement en entrée (4).

3. Machine-outil selon la revendication 1 ou 2, **caractérisée en ce que** la partie de masse de levée (16) est disposée de façon à pouvoir tourner dans un guide-coulisseau (17).

4. Machine-outil selon l'une quelconque des revendications 1 à 3, **caractérisée en ce que** la partie de masse de levée (16) effectue un mouvement de compensation exclusivement en rotation dans le guide-coulisseau (17).

5. Machine-outil selon l'une quelconque des revendications 1 à 3, **caractérisée en ce que** la partie de masse de levée (16) effectue un mouvement de compensation de translation en rotation combiné dans le guide-coulisseau (17).

6. Machine-outil selon l'une quelconque des revendications 1 à 5, **caractérisée en ce que** la partie de masse de levée (16) est disposée de façon à pouvoir pivoter dans le guide-coulisseau (17) par le biais d'un palier à rouleaux (22).

7. Machine-outil selon l'une quelconque des revendications 1 à 6, **caractérisée en ce que** le palier à rouleaux (22) de la partie de masse de levée (16) est disposé de façon centrale dans le guide-coulisseau (17) .

8. Machine-outil selon l'une quelconque des revendications 1 à 7, **caractérisée en ce que** l'élément excentré prend la forme d'une fiche excentrée (12) sollicitant la partie de masse de levée (16).

9. Machine-outil selon l'une quelconque des revendications 1 à 8, **caractérisée en ce que** l'élément excentré (12) est disposé de façon centrale dans le guide-coulisseau (17).

10. Machine-outil selon l'une quelconque des revendications 1 à 9, **caractérisée en ce que** l'arbre d'entraînement en sortie (4) est disposé de façon à pouvoir voler de façon excentrée dans le carter (14).
